# EUROPEAN PATENT APPLICATION

(11) **EP 4 775 340 A1**
(43) Date of publication of application: **15.07.2026**
(21) Application number: 25227780.1
(22) Date of filing: 30.12.2025
(51) Int. Cl.: B23D 43/02

(54) **HYBRID CUTTING TOOL FOR INTERNAL WELD BEAD REMOVAL**

(30) Priority: 07.01.2025 PL 45090325
(71) Applicant: Uniwersytet Morski w Gdyni, 81-225 Gdynia (PL)
(72) Inventor: LASTOWSKA, Olga, 84-240 Reda (PL)

(57) **Abstract**

The subject of the invention is a hybrid cutting tool for removing the weld reinforcement of a butt weld joining tubular and cylindrical components, with the capability of burnishing the weld surface. The invention enables the machining of complex circular butt weld surfaces of various dimensions, made of different grades of steel and alloys, and allows automation of the machining process, increased productivity, and reduced labor intensity of weld processing operations. Additionally, the hybrid cutting tool is characterized by extensive functional properties ensuring longterm operational durability and applicability in the shipbuilding, aerospace, defense, railway transport, and power generation industries.

## Description

The subject of the invention is a hybrid cutting tool for removing the weld reinforcement of a butt weld joining tubular and cylindrical components.

Where it is technologically necessary to ensure the internal clearance of pipes and cylindrical components forming parts of machines and mechanisms, it is required to remove the post-weld reinforcement inside these components down to the level of the internal diameter. This operation is limited by access to the machining location through the internal surface of the pipe or cylinder, which prevents the use of conventionally known tools.

In industrial facilities, the most commonly used method of finishing post-weld surfaces is grinding with abrasive tools of various shapes and abrasive materials. This method is not only harmful to the operator's health, but in particular leads to surface overheating and the formation of numerous defects on the machined surface. Locally tempered or re-hardened areas are formed, creating structural notches in the surface layer and zones where residual tensile stresses accumulate. These defects lead to the formation of ordinary and fatigue cracks, as well as galling and other damage detrimental to the machined joint surface. Consequently, the operation of a welded structure made of such material becomes less resistant to corrosion, and the fatigue strength of the weld decreases, which may ultimately lead to failure of the welded components. The grinding process remains a process that cannot be automated, and therefore requires manual labour. Furthermore, its harmful impact on both the operator and the environment necessitates the use of additional protective measures to eliminate or reduce these adverse effects.

From Polish patent document PAT.166176 there is known a method of grinding external longitudinal welds of shell courses and a device for grinding external longitudinal welds of shell courses, wherein the weld is ground tangentially to the surface of the shell course and along the shell course in at least three passes of the grinding head, each preceded by rotation of the shell course.

The grinding device comprises a grinding head slidably mounted in a support, a drive assembly, and a positioner.

The grinding head is provided with a contact roller arranged perpendicularly to the weld line of the shell course and comprises a tensioning roller, an abrasive belt, a guide roller, and a compression spring.

From Polish patent document PAT.166176 there is known a method of grinding external longitudinal welds of shell courses and a device for grinding external longitudinal welds of shell courses, wherein the weld is ground tangentially to the surface of the shell course and along the shell course in at least three passes of the grinding head, each preceded by rotation of the shell course.

The grinding device comprises a grinding head slidably mounted in a support, a drive assembly, and a positioner. The grinding head is provided with a contact roller arranged perpendicularly to the weld line of the shell course and comprises a tensioning roller, an abrasive belt, a guide roller, and a compression spring.

From Polish patent document PAT.174051 there is known a method and a milling machine for machining the weld root of joined cylindrical elements. The method consists in moving the weld-root milling machine, by means of chains, along the circumference of the joined cylindrical elements arranged in an auxiliary position on a rotary table, and removing excess material from the weld root previously deposited at the joint of the elements by means of an end mill. The milling machine comprises a housing, a hydraulic drive unit of the milling cutter with a mechanism for adjusting the milling depth, a hydraulic drive unit for driving wheels for moving the milling machine along the lateral surface of the joined cylindrical elements by means of chains, a guide roller guiding the machine along the weld groove, a mechanism correcting the movement of the cutter along the weld root, and a chain drive mechanism.

In patent application P.327604 there is disclosed a method and a device for machining a joint between two elements, wherein a joining material in the form of a weld is applied along the joint, and the weld formed from the joining material is machined to a predetermined cross-sectional shape by means of a profiled cutting tool moved along the weld and removing its outer layer, with simultaneous removal of the removed outer layer by suction. Preferably, a polyurethane-based sealant may be used as the joining material. The tool suitable for this purpose comprises a suction nozzle having a suction opening and a cutting tool mounted at its edge, the cutting tool being capable of removing and guiding the upper layer of the weld formed from the joining material toward the suction opening for removal to the outside.

From Polish patent document PAT.200190 there is known a combined tool for use in machine tools for chip machining of workpieces, comprising a basic body provided with several blades arranged on the circumference of the basic body, each blade having a cutting portion and a guiding portion forming reaming blades for precision reaming of a bore, and at least one plunge blade arranged with axial offset relative to the reaming blades and adjustable radially with respect to the basic body.

From Polish patent document PAT.203886 there is known a cutting or burnishing tool for mechanical machining of external or internal rotary surfaces. The tool comprises a replaceable working insert mounted in a body. A fastening element and a rotary element rotate freely during machining, and an element mounted on rolling elements in the front part of the body is characterised in that a displacement and length measuring sensor is arranged on the surface of the body, preferably accommodated in a housing, the working insert being replaceable.

In industrial design description PL2911752 there is disclosed a cutting tool formed in the shape of a stepped cylinder and intended for machining metals during a cutting process, the tool being mounted in numerically controlled machine tools. The tool in the form of a stepped cylinder, having a grey colour and a matte structure with a through-hole along the axis of the tool, comprises, on its larger diameter, eight machining surfaces in the form of teeth uniformly distributed on the outer circumference, to which cutting inserts are alternately fastened at the top and bottom.

In patent application P.433166 there is disclosed a multi-edge tool for finishing machining of post-weld surfaces, formed as a steel rod of rectangular cross-section provided on one of its external surfaces with cutting elements in the form of teeth, wherein the width of each tooth is equal to the maximum width of the machined weld face allowance, the length of each tooth is at least equal to half of the distance between adjacent teeth, and the difference in height between the cutting edges of the first and the last tooth is equal to the height of the machined weld face allowance, the teeth being arranged linearly and their number depending on the length of the weld being machined.

Tools in the form of cutting inserts having multiple cutting edges are disclosed, for example, in patent documents US2006263153A1, US5059069A, and US2015016899A1, while assembled tools are disclosed in patent documents US2954570A, CN107433340A, CN105935819A, and US5205678A; however, there is still a lack of tools for finishing machining of butt joints of tubular cross-section.

The main object of the present invention is to develop a cutting tool which enables both roughing and finishing machining of a butt weld bead using a single tool, by moving the tool along the axis of a pipe or cylinder perpendicularly to the weld axis, wherein the machining allowance, treated as the height of the weld reinforcement, is removed during a single pass of the cutting tool along the axis of the pipe or cylinder, thereby ensuring uniformity and consistency of the internal shape and dimensions along the entire length of the welded pipe or cylindrical element. The shape of the tool rings reproduces the internal shape of the machined element, and the geometry of the rings is adapted to the weld cutting conditions, including machining of non-homogeneous material of increased hardness, cyclic impact loads acting on the cutting edge, and the presence of numerous material defects of various shapes and dimensions resulting from the use of different welding methods.

This object has been achieved by designing an innovative tool enabling elimination of numerous surface layer defects and damages arising after welding, such as microcracks, fissures, inclusions, pores, craters, indentations, and gouges, as well as by reducing the undesirable effect of tensile residual stresses through the addition of supplementary burnishing rings for surface treatment, which has significantly increased the fatigue strength, corrosion resistance, and service durability of the weld during operation of such a joint.

The essence of the invention consists in a hybrid cutting tool for use in hydraulic presses for finishing machining of the weld reinforcement of circumferentially welded pipes, formed as a steel rod provided with multi-edge cutting elements having chip breakers or burnishing elements, the tool having a monolithic body made of molybdenum high-speed steel of grade from 5290 to S690, of circular cross-section, comprising a lower guide and a guiding cone, an upper guide, and a working surface formed there between by an even number of cutting and burnishing rings containing, respectively, cutting elements in the form of cutting edges and burnishing elements in the form of rounded edges and chip grooves, wherein the height of each ring corresponds to its diameter, the diameter decreasing in the direction of the main motion from a larger value to a smaller value, and the difference between the diameter of the first ring and that of the last ring corresponds to the volume of the removed material.

Preferably, each ring along the working surface of the rod comprises main flank surfaces forming part of the chip groove, main rake surfaces defining the length of the ring, and auxiliary surfaces forming the rear side of the rings, wherein the main cutting edge is formed by the intersection of the main flank surface and the main rake surface, and the length of the ring is greater than half of the distance between adjacent cutting edges of the cutting rings.

Preferably, the cutting rings located in the lower part of the rod comprise rings numbered from 1 to 10, wherein the cutting edge radius is equal to or greater than 0.5 times the tool pitch, the pitch corresponding to the distance between the apices of two adjacent rings.

Preferably, the burnishing rings located in the upper part of the rod comprise rings numbered from 11 to 14, wherein the edge rounding radius is twice the feed per side of the rings.

Preferably, the edge rounding radius remains greater than the thickness of the layer removed by a single cutting edge.

Preferably, each ring comprises main flank surfaces forming part of the chip groove, main rake surfaces defining the length of the cutting ring, and auxiliary surfaces forming the rear side of the rings, wherein the cutting edge of the ring is formed by the intersection of the main flank surface and the main rake surface, and the length of the ring is greater than half of the distance between adjacent cutting edges of the cutting rings.

Preferably, the lower centring guide at the entry into the pipe has a length greater than the length of the pipe being machined, wherein the upper centring guide at the exit from the pipe has a length equal to one half of the length of the lower guide together with the guiding cone.

Preferably, machining of the weld is performed in a single pass by displacement along the axis of the pipe or cylinder perpendicularly to the axis of the welded joint.

For machining complex surfaces differing in dimensions, shape, and quality, in particular in the machining of welded or brazed surfaces, a tool of specialised construction, being the subject of the present invention, is required. Such a tool, owing to the appropriate shaping and positioning of the cutting edges, properly adapted to the machining conditions on the basis of strength calculations, is applicable under the following conditions: interrupted cutting (resulting from the geometry of post-weld surfaces), non-uniform machining allowance, a variable number of simultaneously operating cutting edges, discontinuity of the machining process, impact or periodically varying loads acting on the cutting edges, inhomogeneity of the machined material, and increased wear progression.

The invention enables machining of complex weld surfaces of circular shape and various dimensions, made of different grades of steel and alloys, while allowing automation of the machining process, increasing productivity, and reducing the labour intensity of the machining operation. The subject matter of the invention is illustrated by way of an exemplary embodiment in the drawings, wherein Fig. 1 shows a detailed drawing in longitudinal section, views and details in longitudinal section, Fig. 2 shows tool details comprising a burnishing ring in longitudinal section, and Fig. 3 shows tool details comprising a cutting ring in longitudinal section and a half-section of the rings with standard chip breakers.

In an exemplary embodiment of the invention, the hybrid tool for removing weld reinforcement inside pipes or cylindrical elements by cutting during their joining by butt welding is formed as a steel rod of circular cross-section or another closed shape, constituting a monolithic body made of molybdenum high-speed steel S290, S393, 5590, or S690, thereby ensuring high resistance to abrasion and wear. The integrated body of the tool comprises, respectively, a lower guide Ld and a guiding cone Ls, an upper guide Lg, and a working surface with 14 rings arranged there between. The working surface provided with 14 rings comprises both cutting elements in the form of cutting edges and burnishing elements in the form of rounded edges and chip grooves forming spaces between the rings, wherein the ring height h, equal to the ring diameter, decreases in the direction of the main motion from a larger value to a smaller value, and the difference between the diameter of the first and the last ring corresponds to the volume of the removed material and represents the volume of the butt weld reinforcement inside the pipe or cylinder. Each ring of the tool comprises main flank surfaces forming part of the chip groove, main rake surfaces defining the length of the ring, and auxiliary surfaces forming the rear side of the rings. The main cutting edge forming the cutting edge of the ring is created by the intersection of the main flank surface and the main rake surface. The ring length t is greater than half of the distance between adjacent cutting rings, which increases the strength and durability of the tool and allows operation under interrupted cutting conditions in the presence of impact loads.

The last two pairs of burnishing rings have a specialised geometry in order to eliminate cracks, craters, pores and other welding and machining defects, to reduce surface roughness, and to improve the principal mechanical parameters of the surface. The cutting rings are located in the lower part of the rod and comprise rings numbered from 1 to 10. The cutting edge radius length t is equal to or greater than 0.5 times the tool pitch tp, wherein the pitch corresponds to the distance between the apices of two adjacent rings and is defined by the relationship t ≥ 0.5tp.

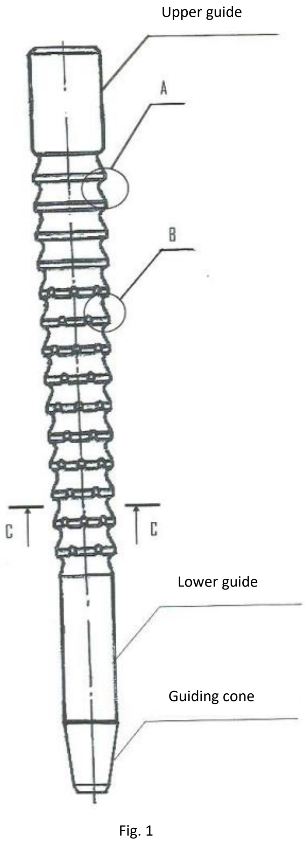

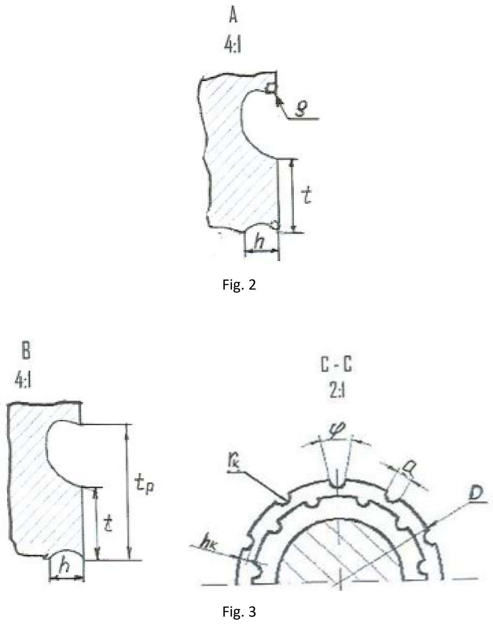

The burnishing rings are located in the upper part of the rod and comprise rings numbered from 11 to 14. The edge rounding radius ρ is twice the feed s per side of the rings, which is defined by the relationship ρ > 2s, where s denotes the feed per side of the rings [mm] (Fig. 1, Fig. 2).

The lower guide serves to centre the tool at the entry into the pipe. The length of the guide is greater than the length of the pipe being machined, which is defined by the relationship Ld > Lr, where Lr denotes the length of the pipe being machined, in mm. The lower guide transitions into a guiding cone, which serves to guide the tool inside the pipe after circumferential butt welding (the weld being perpendicular to the pipe axis). The upper guide serves to centre the tool at the exit from the pipe (Fig. 1). Machining of the butt weld using the tool is performed in a single pass by displacement along the axis of the pipe or cylinder, perpendicularly to the axis of the welded joint.

An advantage of the solution according to the invention is the geometry of the tool rings, which additionally enables a burnishing effect. Such a solution combines the cutting method with the burnishing technique, which leads to a significant improvement in surface quality and its mechanical properties and reduces hazardous tensile residual stresses. Consequently, the proposed tool for post-weld machining increases the strength of the weld, its resistance to fatigue and corrosion, thereby ensuring high service life and reliability.

The tool is intended for installation in hydraulic devices (hydraulic presses) without the need for specialised machinery, and removal of the weld reinforcement is performed in a single feed movement of the tool by means of the pressure exerted by the hydraulic press. The hybrid cutting tool manufactured according to the invention is characterised by extensive properties ensuring long-term operation. The most important features include high hardness and wear resistance, such that the tool does not require frequent sharpening or refurbishment. On the other hand, it may be resharpened and operated over its full range while retaining its technical characteristics.

The hybrid tool according to the invention is applicable wherever welded pipe elements are present, including in the shipbuilding, aerospace, defence, railway transport, and power generation industries. It is effective in post-butt-welding machining of steel and aluminium pipes, including thin-walled pipes, where the weld is arranged perpendicularly to the machining surface axis, and where a durable and mechanically robust structure is required.

## Claims

1. A hybrid cutting tool for use in hydraulic presses for the finishing machining of the weld reinforcement of circumferentially welded pipes, formed as a steel rod provided with multi-edge cutting elements having chip breakers or burnishing elements, **characterised in that** it has a monolithic body made of molybdenum high-speed steel of grade from S290 to S690, of circular cross-section, comprising a lower guide (Ld) and a guiding cone (Ls), an upper guide (Lg), and a cutting surface formed there between by an even number of cutting and burnishing rings containing, respectively, cutting elements in the form of cutting edges and burnishing elements in the form of rounded edges and chip grooves, wherein the height of each ring corresponds to its diameter, the diameter decreasing in the direction of the main motion from a larger to a smaller value, and the difference between the diameter of the first ring and the last ring corresponds to the volume of the removed material.

2. The tool according to claim 1, **characterised in that** each ring along the cutting surface of the rod comprises main flank surfaces forming part of the chip groove, main rake surfaces defining the length of the ring, and auxiliary surfaces forming the rear side of the rings, wherein the main cutting edge is formed by the intersection of the main flank surface and the main rake surface, and the length of the ring is greater than half of the distance between adjacent cutting edges of the cutting rings.

3. The tool according to claim 1, **characterised in that** the cutting rings located in the lower part of the rod comprise rings numbered from 1 to 10, wherein the cutting edge radius length (t) is equal to or greater than 0.5 times the tool pitch (tp), the pitch corresponding to the distance between the apices of two adjacent rings.

4. The tool according to claim 1, **characterised in that** the burnishing rings located in the upper part of the rod comprise rings numbered from 11 to 14, wherein the edge rounding radius (ρ) is twice the feed (s) per side of the rings.

5. The tool according to claims 1 and 4, **characterised in that** the edge rounding radius remains greater than the thickness of the layer removed by a single cutting edge.

6. The tool according to claim 1, **characterised in that** each ring comprises main flank surfaces forming part of the chip groove, main rake surfaces defining the length of the cutting ring, and auxiliary surfaces forming the rear side of the rings, wherein the cutting edge of the ring is formed by the intersection of the main flank surface and the main rake surface, and the length of the ring is greater than half of the distance between adjacent cutting edges of the cutting rings.

7. The tool according to claim 1, **characterised in that** the lower centring guide at the entry into the pipe has a length greater than the length of the pipe being machined, wherein the upper centring guide at the exit from the pipe has a length equal to one half of the length of the lower guide together with the guiding cone.

8. The tool according to claim 1, **characterised in that** the weld is machined in a single pass by displacement along the axis of the pipe or cylinder, perpendicularly to the axis of the welded joint of the pipe.
